# FASCICULE DE BREVET EUROPEEN

(11) **EP 4 281 645 B1**
(45) Date de publication et mention de la délivrance du brevet: **10.09.2025**
(21) Numéro de dépôt: 22701624.3
(22) Date de dépôt: 25.01.2022
(51) Int. Cl.: G05B 19/042, G05B 23/02, E06B 9/68

(54) **PROCÉDÉ ET DISPOSITIF DE SURVEILLANCE DE STATUT DE FONCTIONNEMENT D'ACTIONNEURS ÉLECTROMÉCANIQUES D'UNE INSTALLATION DOMOTIQUE**
VERFAHREN UND VORRICHTUNG ZUR ÜBERWACHUNG DES BETRIEBSZUSTANDES VON ELEKTROMECHANISCHEN AKTUATOREN EINER HAUSTECHNIKANLAGE
METHOD AND DEVICE FOR MONITORING THE OPERATING STATUS OF ELECTROMECHANICAL ACTUATORS OF A HOME-AUTOMATION INSTALLATION

(30) Priorité: 25.01.2021 FR 2100677
(43) Date de publication de la demande: 29.11.2023
(73) Titulaire: Somfy Activites SA, 74300 Cluses (FR)
(72) Inventeur: CHERON, Eric, 74300 CLUSES (FR); GERINIERE, François, 74300 CLUSES (FR); PAVLOV, Alexey, 74300 CLUSES (FR)
(74) Mandataire: Lavoix
(86) Numéro de dépôt international: PCT/EP2022/051570
(87) Numéro de publication internationale: WO 2022/157376

(56) Documents cités:
- US-A1- 2009 308 543
- US-A1- 2017 356 243
- US-A1- 2018 252 036

## Description

La présente invention concerne un procédé de surveillance de statut de fonctionnement d'actionneurs électromécaniques d'une installation domotique, un dispositif de surveillance de statut de fonctionnement d'actionneurs électromécaniques associé et une installation domotique associée.

L'invention se situe dans le domaine de la domotique pour bâtiments à usage commercial, industriel ou résidentiel, qu'ils soient individuels ou collectifs.

La domotique, ou « Building Automation Systems » en anglais, concerne l'équipement de bâtiments d'automatismes commandables à distance, visant à assurer des fonctions de sécurité, de confort ou de gestion d'énergie. Il s'agit par exemple de la commande de systèmes de chauffage, de climatisation, de l'actionnement à distance de stores ou volets roulants, ou de la sécurisation à distance par contrôle de systèmes de fermeture.

En particulier, l'invention s'applique pour des installations domotiques comprenant des dispositifs d'occultation motorisés, par exemple de fermeture, ou de protection solaire, comprenant un dispositif d'entraînement motorisé. Un dispositif d'entraînement motorisé comprend un actionneur électromécanique d'un élément mobile d'occultation, i.e. de fermeture ou de protection solaire, par exemple un volet, une porte, un portail, une grille, un store ou tout matériel équivalent, plus généralement appelé écran par la suite. La commande de tels actionneurs électromécaniques est effectuée par des dispositifs de contrôle, également appelés contrôleurs de moteur (ou « motor controller » en anglais). Les dispositifs de contrôle sont eux-mêmes pilotés par des commandes, provenant soit d'une unité de commande centrale de l'installation complète, soit d'unités de commande locales commandables par un utilisateur.

Afin de faciliter les mécanismes de commande et de contrôle centralisés, les divers éléments de l'installation domotique pour bâtiment sont équipés de moyens de communication et une architecture de réseau de communications est mise en place, les communications étant effectuées au moyen d'un ou plusieurs protocoles de communication choisis.

On connaît des dispositifs de contrôle d'actionneurs électromécaniques du type décrit ci-dessus qui sont configurés pour contrôler des groupes d'actionneurs électromécaniques. Cela est particulièrement utile, par exemple, pour la commande automatique de dispositifs d'occultation, e.g. volets ou stores, en fonction de conditions météorologiques, par exemple de l'ensoleillement sur une façade de bâtiment ou d'un dépassement de seuil de température.

Pour assurer un bon fonctionnement, et en particulier pour assurer la sécurité de fonctionnement de l'installation domotique, il est prévu de surveiller le statut de fonctionnement de chaque actionneur électromécanique de l'installation. Le statut de fonctionnement indique notamment une information de position de l'élément mobile du dispositif d'occultation (par exemple ouvert, fermé, pourcentage d'ouverture, pourcentage de fermeture) et/ou une information de bon fonctionnement ou erreur (fonctionnement nominal, seuil thermique atteint, défaut de fonctionnement). Lorsqu'un dispositif de contrôle est configuré pour piloter un nombre N d'actionneurs, la récupération des statuts de fonctionnement prend un temps qui augmente avec ce nombre N, et peut, lorsque N est grand, dépasser un seuil de réactivité souhaité pour une bonne surveillance de l'installation domotique.

Le document US2009/308543 A1 décrit un procédé de contrôle d'actionneurs électromécaniques d'une installation domotique comprenant des dispositifs d'occultation motorisés.

L'invention a pour but de remédier aux inconvénients de l'état de la technique en proposant un procédé de surveillance du statut de fonctionnement des actionneurs plus efficace.

A cet effet, l'invention propose, selon un aspect, un procédé de surveillance de statut de fonctionnement d'actionneurs électromécaniques d'une installation domotique, l'installation domotique comprenant une pluralité de dispositifs d'occultation motorisés, chaque actionneur électromécanique associé à un dispositif d'occultation comprenant au moins un moteur électrique, commandable par ledit actionneur électromécanique pour déplacer en ouverture et/ou en fermeture un élément mobile du dispositif d'occultation, lesdits actionneurs électromécaniques étant pilotés par groupe(s) d'actionneurs électromécaniques par un dispositif de contrôle, lesdits actionneurs électromécaniques et lesdits dispositifs de contrôle étant connectés dans un réseau de communication et étant configurés pour communiquer selon un protocole de communication prédéfini.

Ce procédé comporte des étapes, mises en œuvre par un processeur de calcul du dispositif de contrôle, de :
- pour chaque groupe d'actionneurs électromécaniques pilotés par ledit dispositif de contrôle, obtention et mémorisation d'un actionneur représentatif du groupe d'actionneurs ;
- sur au moins un cycle temporel choisi, itération des étapes suivantes :
   - obtention d'un statut de fonctionnement de l'actionneur représentatif du ou de chaque groupe d'actionneurs ;
   - obtention d'un statut de fonctionnement d'au moins un autre actionneur piloté par ledit dispositif de contrôle.

Avantageusement, durant un cycle temporel, à chaque itération sont obtenus, pour chaque groupe d'actionneurs électromécaniques, le statut de fonctionnement de l'actionneur représentatif de chaque groupe, ainsi que le statut de fonctionnement d'au moins un autre actionneur électromécanique pilotés. Ainsi, la récupération des statuts de fonctionnement à chaque itération est rapide, tout en permettant une surveillance satisfaisante des actionneurs.

Le procédé de surveillance de statut de fonctionnement d'actionneurs électromécaniques selon l'invention peut également présenter une ou plusieurs des caractéristiques ci-dessous, prises indépendamment ou selon toutes les combinaisons techniquement envisageables.

Le statut de fonctionnement d'un actionneur comprend une information de position de l'élément mobile du dispositif d'occultation et/ou une information de bon fonctionnement ou de dysfonctionnement du dispositif d'occultation.

L'information de position indique une position d'ouverture ou un pourcentage d'ouverture, une position de fermeture ou un pourcentage de fermeture.

L'obtention d'un statut de fonctionnement de l'actionneur représentatif d'un groupe d'actionneurs comprend, pour chaque groupe d'actionneurs, une formulation de requête de demande de statut de statut de l'actionneur représentatif et une réception de réponse comprenant ledit statut dudit actionneur représentatif, lesdites requête et réponse comprenant un identifiant dudit actionneur représentatif.

L'obtention d'un statut de fonctionnement d'au moins un autre actionneur piloté par ledit dispositif de contrôle comprend une étape de sélection dudit autre actionneur parmi les actionneurs pilotés par ledit dispositif de contrôle non désignés comme actionneurs représentatifs de groupe d'actionneurs, la sélection étant effectué selon un ordre de sélection prédéterminé.

L'ordre de sélection prédéterminé désigne successivement des actionneurs appartenant à des groupes d'actionneurs différents.

L'obtention d'un statut de fonctionnement d'au moins un autre actionneur piloté par ledit dispositif de contrôle comprend une étape de sélection de l'autre actionneur parmi les actionneurs pilotés par ledit dispositif de contrôle non désignés comme actionneurs représentatifs de groupe d'actionneurs, la sélection étant effectué aléatoirement parmi des actionneurs pilotés par le dispositif de contrôlé et non sélectionnés précédemment.

L'obtention d'un statut de fonctionnement d'au moins un autre actionneur piloté par ledit dispositif de contrôle est effectuée, lors de chaque itération, pour chaque groupe d'actionneurs.

Le procédé comporte, à chaque itération, suite à l'obtention du statut de fonctionnement de l'actionneur représentatif de chaque groupe d'actionneurs et à l'obtention du statut de fonctionnement d'au moins un autre actionneur, une mise à jour des statuts de fonctionnement des actionneurs d'un groupe d'actionneurs à partir du statut de fonctionnement de l'actionneur représentatif dudit groupe d'actionneurs et une commande d'affichage desdits statuts de fonctionnement obtenus pour chaque actionneur piloté par ledit dispositif de contrôle.

Selon un autre aspect, l'invention concerne un dispositif de surveillance de statut de fonctionnement d'actionneurs électromécaniques, mis en œuvre dans un dispositif de contrôle d'actionneurs électromécaniques d'une installation domotique, l'installation domotique comprenant une pluralité de dispositifs d'occultation motorisés, chaque actionneur électromécanique associé à un dispositif d'occultation comprenant au moins un moteur électrique, commandable par ledit actionneur électromécanique pour déplacer en ouverture et/ou en fermeture un élément mobile du dispositif d'occultation, lesdits actionneurs : électromécaniques étant pilotés par groupe(s) d'actionneurs électromécaniques par un dispositif de contrôle, lesdits actionneurs électromécanique et lesdits dispositifs de contrôle étant connectés dans un réseau de communication et étant configurés pour communiquer selon un protocole de communication prédéfini. Ce dispositif de surveillance comporte un processeur de calcul configuré pour mettre en œuvre, pour un dispositif de contrôle :
- un module d'obtention et mémorisation d'un actionneur représentatif du groupe d'actionneurs pour chaque groupe d'actionneurs électromécaniques pilotés par ledit dispositif de contrôle ;
- et pour mettre en œuvre de manière itérative, sur au moins un cycle temporel choisi un module d'obtention d'un statut de fonctionnement de l'actionneur représentatif du ou de chaque groupe d'actionneurs, et un module d'obtention d'un statut de fonctionnement d'au moins un autre actionneur piloté par ledit dispositif de contrôle.

Le dispositif de surveillance de statut de fonctionnement d'actionneurs électromécaniques est configuré pour mettre en œuvre un procédé de surveillance de statut de fonctionnement d'actionneurs électromécaniques selon tous ses modes de réalisation.

Selon un autre aspect, l'invention concerne une installation domotique comprenant une pluralité de dispositifs d'occultation motorisés pilotés par des actionneurs électromécaniques, l'installation domotique comprenant au moins un dispositif de contrôle d'actionneurs électromécaniques comprenant un dispositif de surveillance de statut de fonctionnement d'actionneurs électromécaniques tel que brièvement décrit ci-dessus.

Selon un autre aspect, l'invention concerne programme d'ordinateur comportant des instructions logicielles qui, lorsqu'elles sont exécutées par un dispositif électronique programmable, mettent en œuvre un procédé de surveillance de statut de fonctionnement d'actionneurs électromécaniques tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est une vue schématique d'une installation domotique pour bâtiment ;
[Fig 2] la figure 2 est un exemple schématique de réseau de communication d'une installation domotique ;
[Fig 3] la figure 3 est une représentation schématique d'une interface de communication d'un élément communicant appartenant au réseau de communication de la figure 2 ;
[Fig 4] la figure 4 est un exemple de dispositif de contrôle adapté à contrôler des groupes d'actionneurs ;
[Fig 5] la figure 5 est un organigramme des principales étapes d'un procédé de surveillance de statut de fonctionnement d'actionneurs électromécaniques selon un mode de réalisation.

L'invention sera décrite plus particulièrement dans le contexte de sa mise en œuvre dans une installation domotique pour bâtiment, notamment une installation domotique permettant le contrôle et la commande à distance de dispositifs d'occultation motorisés, par exemple stores ou volets roulants placés devant des ouvertures du bâtiment ou portes coulissantes, par exemple portes de garage. Une telle installation assure des fonctions de sécurité, de confort ou de gestion d'énergie.

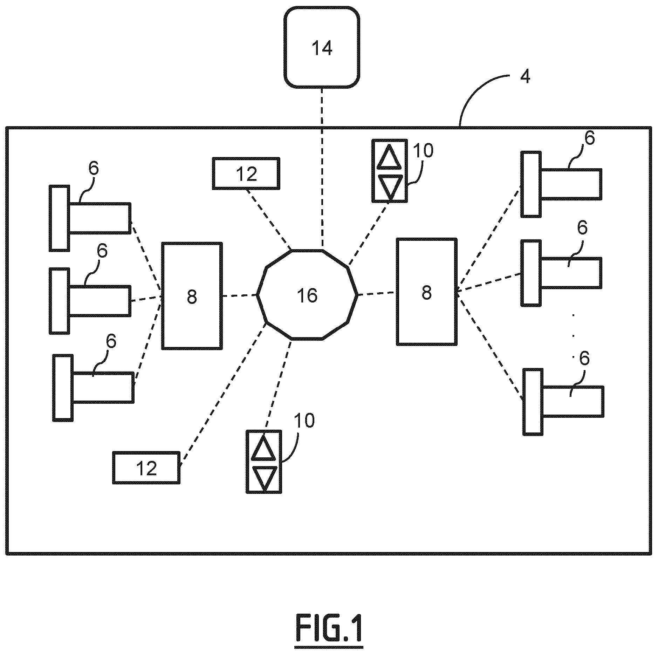

La **figure 1** illustre schématiquement un exemple d'installation domotique 4 pour bâtiment 2. L'installation domotique 4 comprend des équipements domotiques 6 commandables à distance, en particuliers des dispositifs d'occultation. L'invention s'applique pour tout type de dispositif d'occultation, de fermeture, de protection solaire.

De préférence, un équipement domotique 6 comporte un actionneur électromécanique pilotable au moyen d'un signal de commande.

L'actionneur électromécanique comprend au moins un moteur électrique couplé avec une charge mécanique et agencé pour régler ou déplacer un élément du bâtiment 2.

Par exemple dans le cas d'un dispositif d'occultation 6, la charge mécanique est un élément mobile d'occultation, également appelé écran, formé par exemple d'un panneau, un rideau, en toile ou à lames orientables, commandable par au moins un moteur électrique pour se déplacer entre une position ouverte et une position fermée, selon une pluralité de positions intermédiaires.

L'installation domotique 4 comprend également des dispositifs de contrôle 8, chaque dispositif de contrôle, également appelé contrôleur de moteur, étant configuré pour contrôler et commander N actionneurs électromécaniques, N étant un nombre entier supérieur à 1, par exemple compris entre 2 et 20. Le dispositif de contrôle 8 est en particulier configuré pour envoyer des signaux de commande aux actionneurs et pour recevoir des informations des actionneurs commandés.

L'installation domotique 4 comprend également des unités de commande locales 10, destinées à recevoir des instructions de pilotage de la part d'un utilisateur. Par exemple, les unités de commande locales 10 se présentent sous forme de télécommande portative associée à un récepteur fixe, ou en variante sous la forme d'un terminal de commandé fixe, par exemple solidarisé à un mur du bâtiment. Ces unités de commande locales comprennent notamment une interface utilisateur permettant la saisie d'ordre de commande à destination d'un ou plusieurs équipements domotiques de l'installation.

L'installation domotique 4 comporte également des capteurs 12, par exemple, de façon non limitative, des capteurs de température, de taux d'humidité, de valeur de luminosité, de pression de l'air ambiant. De manière classique, chaque capteur est configuré pour effectuer des mesures de valeurs physiques, et à transmettre ces mesures, sous forme de signal électrique, à d'autres éléments de l'installation domotique.

Bien entendu, les capteurs sont représentés schématiquement et peuvent être autonomes ou intégrés dans d'autres éléments de l'installation domotique.

En particulier, chaque dispositif d'occultation comprend un ou plusieurs capteurs, par exemple des capteurs de température permettant de détecter une surchauffe du moteur, et des capteurs de position permettant d'indiquer une position d'ouverture ou de fermeture de l'écran du dispositif d'occultation.

L'installation domotique comporte également une unité de commande centrale 14, également appelée unité BMS pour « Building Management System », munie également d'une interface homme-machine accessible à un opérateur.

Les éléments 6, 8, 10, 12, 14 de l'installation domotique sont équipés d'interfaces de communication et sont interconnectés dans un réseau de communication 16, représenté schématiquement à la figure 1.

Chaque élément de l'installation domotique équipé d'une interface de communication est un élément communicant du réseau de communication 16.

L'architecture du réseau de communication 16, le mode de connexion et le ou les protocoles de communication utilisé(s) sont choisis lors de la mise en place de l'installation domotique dans un bâtiment 2.

Par exemple, à titre non limitatif, une architecture hiérarchique comportant des niveaux de hiérarchie associés à des zones du bâtiment, comme décrit dans la demande de brevet FR3070808 A1, est mise en œuvre.

La communication est effectuée selon un protocole de communication donné.

Par exemple, la communication s'effectue par un échange de messages, par exemple sous forme de paquets, ces messages comportant chacun un en-tête, qui inclut une destination du message, et des données utiles, par exemple un ordre de commande ou une valeur de grandeur physique mesurée par un capteur.

Par exemple, le protocole de communication utilisé est un protocole IP (pour « Internet Protocol »), par exemple IPv6 ou un protocole de communication propriétaire.

Par exemple, le protocole de communication utilisé est le protocole d'automatismes pour le bâtiment KNX^{®}.

Différents protocoles peuvent être utilisés dans diverses parties du réseau de communication 16.

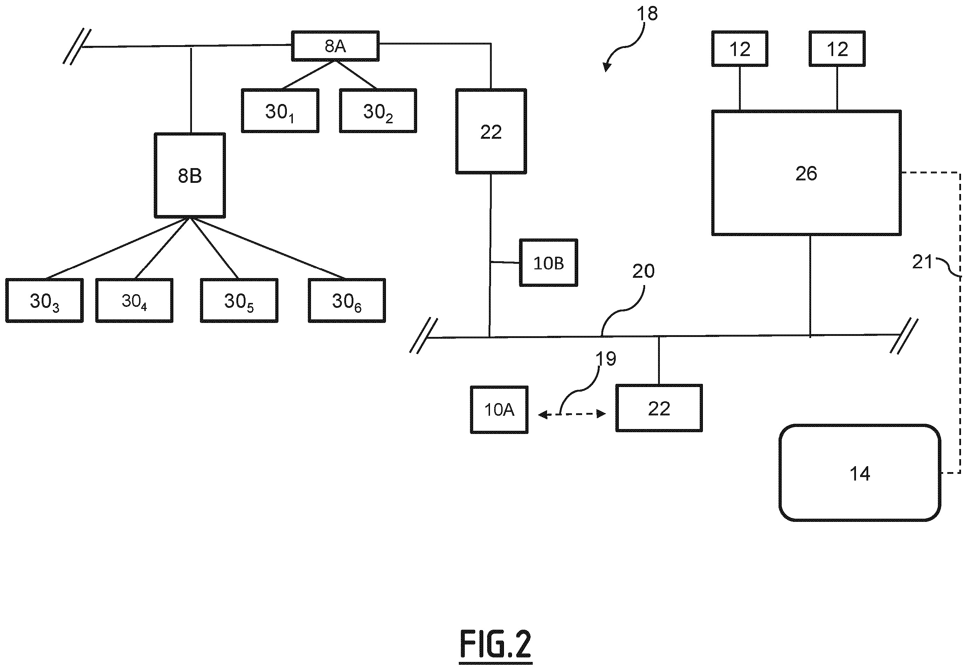

La **figure 2** illustre un exemple schématique de réseau de communication 16 d'une installation domotique 4.

Dans cet exemple, le réseau de communication 16 comprend une liaison physique dorsale 20, et une pluralité d'éléments communicants, reliés à cette liaison dorsale 20 soit directement par liaison filaire, soit indirectement par communication radio entre un élément communicant muni d'une interface de communication radio et un élément communicant directement connecté à cette liaison dorsale 20 au moyen d'une connexion filaire.

Par exemple, une première unité de commande locale 10A de type télécommande est connectée, par des moyens de communication radio 19, à un équipement passerelle 22. La communication radio 19 et par exemple effectué selon le standard Bluetooth ou Wifi.

Un équipement passerelle est un équipement destiné à interconnecter deux parties du réseau distinctes, par exemple, de technologies différentes ou utilisant des protocoles de communication différents, et comporte une interface de communication adapté pour chaque technologie ou protocole de communication mis en œuvre.

La liaison dorsale 20 est un bus de données commun, tel qu'un bus multipoints autorisant des connexions bidirectionnelles, par exemple de type RS485. En variante, la liaison dorsale 20 est une liaison câblée de type Ethernet (norme IEEE 802.3), par exemple Ethernet 100Mbits/s ou supérieur.

Selon une autre variante, le réseau de communication 16 comprend des portions reliées par des équipements passerelles, et les portions respectives utilisent des bus de communication de données de types différents

Par exemple, la première unité de commande locale 10A est configurée pour communiquer des signaux de commande, selon un premier protocole de communication, à l'équipement passerelle 22 qui effectue le passage du premier protocole de communication vers un deuxième protocole de communication, par exemple le protocole KNX^{®}.

Le réseau 16 comporte en outre, dans l'exemple illustré à la figure 2, une deuxième unité de commande locale 10B, directement connectée à la liaison dorsale 20, par exemple configurée pour communiquer des signaux de commande selon le protocole KNX, puis aux équipements domotiques via la passerelle 22.

Le réseau 16 comporte en outre un dispositif de calcul et de commande central 26, également appelé « Master controller », et adapté pour contrôler l'ensemble de l'installation. Dans l'exemple illustré le dispositif de calcul et de commande central 26 est connecté à une pluralité de capteurs 12, configurés pour fournir des mesures physiques, ces capteurs 12 faisant partie par exemple d'une station météorologique, permettant de fournir un ensemble de valeurs physiques de mesures de température, pression, taux d'humidité dans l'air etc. Le dispositif de calcul et de commande central 26 comporte une ou plusieurs unités de calcul (non représentées). Le dispositif de calcul et de commande central 26 est en outre configuré pour communiquer avec l'unité de commande centrale 14, par exemple radio 21, par exemple Wifi, ou une liaison filaire.

Le réseau 16 comporte en outre des dispositifs de contrôle 8A, 8B d'actionneurs électromécaniques 30₁,30₂, 30₃, 30₄, 30₅, 30₆ de dispositifs d'occultation (non représentés sur la figure 2).

Dans l'exemple schématique illustré, le dispositif de contrôle 8A est également un équipement passerelle du réseau, qui permet l'interconnexion entre une première portion du réseau et une deuxième portion du réseau, configurées pour communiquer selon des protocoles de communication différents.

Le dispositif de contrôle 8A est adapté pour commander des actionneurs électromécaniques 30₁, 30₂, chaque actionneur étant par exemple configuré pour commander l'ouverture et/ou la fermeture totale ou partielle d'un écran, par exemple d'un store enroulable. Dans un mode de réalisation le dispositif de contrôle 8A est connecté à un équipement intermédiaire qui a une fonction d'interface entre les actionneurs électromécaniques et le réseau ou la portion de réseau de communication, par exemple entre des actionneurs électromécaniques adaptés pour communiquer selon un protocole de communication propriétaire et une portion de réseau RS485.

Le dispositif de contrôle 8B est configuré, dans cet exemple, pour commander des actionneurs 30₃, 30₄, 30₅, 30₆.

Par la suite, les actionneurs électromécaniques seront appelés simplement actionneurs.

De préférence, chaque dispositif de contrôle 8, 8A, 8B d'actionneurs est configuré pour effectuer des commandes groupées pour un ou plusieurs groupes d'actionneurs.

Par exemple, le regroupement en groupes d'actionneurs est effectué en fonction de critères de positionnement, par exemple s'agissant d'actionneurs destinés à commander en ouverture/fermeture des dispositifs d'occultation situés par exemple sur une même façade d'un bâtiment, à un même étage ou plus généralement dans une zone exposée à des conditions météorologiques (e.g. ensoleillement, température) similaires. De plus, avantageusement, la commande groupée permet d'obtenir par exemple un alignement parfait des écrans mobiles des dispositifs d'occultation, par exemple des stores, permettant ainsi d'obtenir un effet esthétique global Avantageusement, cette fonctionnalité de commande groupée d'actionneurs permet à l'utilisateur de choisir de piloter, en une seule commande, un ensemble de moteurs ou de charges électriques (plusieurs fenêtres pilotées ensemble dans un bureau, « open space », salle de réunion, un dispositif d'éclairage et un store piloté de manière commune ...)

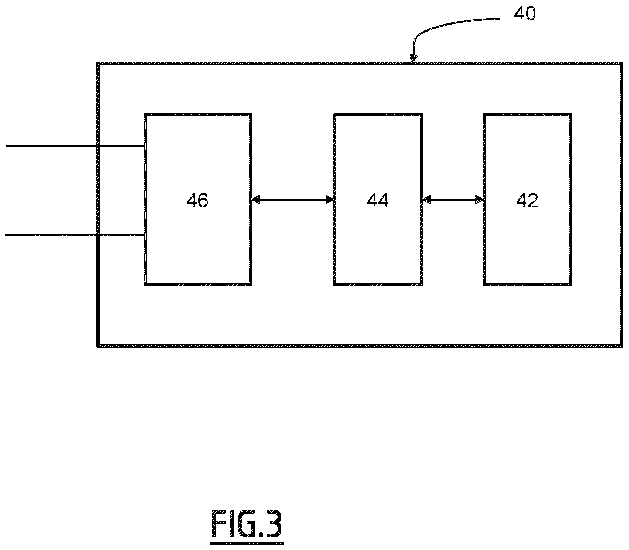

La **figure 3** illustre schématiquement une interface de communication 40 d'un élément communicant du réseau de communication 16.

L'interface de communication d'un élément communicant a pour fonction de connecter cet élément communicant à un ou plusieurs réseaux de communication. Elle lui permet ainsi de communiquer avec les autres éléments communicants du ou des réseaux auquel il est connecté.

Comme illustré sur la figure 3, chaque interface de communication 40 comporte un contrôleur réseau 42, une unité de mémoire électronique 44 et un module d'entrée-sortie 46, aussi nommé « transceiver » en langue anglaise, le module d'entrée-sortie 46 étant ici pourvu d'un connecteur agencé pour raccorder physiquement le module d'entrée-sorties 46 à une couche physique du réseau de communication 16.

Le contrôleur réseau 42 comporte un calculateur électronique, par exemple un ou plusieurs processeurs, microprocesseurs ou tout autre moyen équivalent, programmé pour assurer le traitement des données transitant par le réseau de communication 16 et par le connecteur du module d'entrée-sortie 46.

Par exemple, le contrôleur réseau 42 est programmé pour traiter automatiquement les données reçues par le module d'entrée-sortie 46 et étant destinées à l'interface de communication 40. Le traitement peut par exemple consister à extraire et décoder le contenu de paquets reçus par l'interface de communication et/ou transmettre ce contenu à un équipement domotique.

De façon complémentaire, le contrôleur réseau 42 est programmé pour préparer automatiquement les données émises par l'équipement domotique auquel il est associé, en vue de leur envoi vers un ou plusieurs équipements domotiques connectés au réseau de communication 16.

L'unité de mémoire 44 contient notamment une adresse réseau, une partie d'adresse réseau ou au moins un identifiant, permettant d'identifier de façon unique l'interface de communication 40 sur le réseau de communication 16.

L'interface de communication 40 est par exemple compatible avec le protocole IPv6.

En outre, l'unité de mémoire 44 contient avantageusement des instructions de code de programme exécutables pour assurer le fonctionnement précédemment décrit du contrôleur réseau 42.

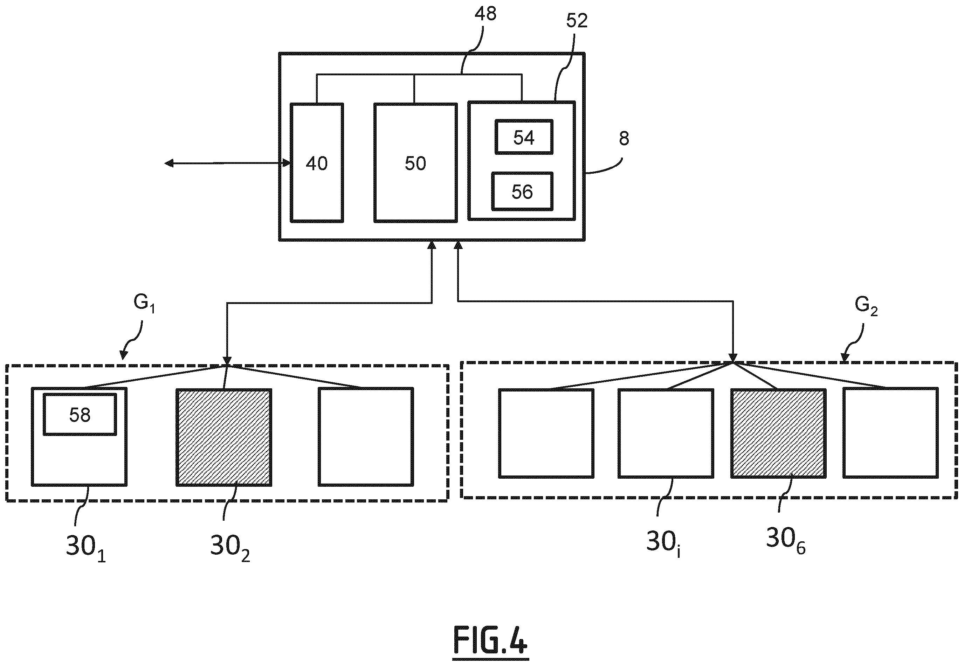

La **figure 4** illustre schématiquement un exemple de contrôle/commande de groupes d'actionneurs. Le dispositif de contrôle 8 comporte une interface de communication 40, telle que décrite en référence à la figure 3, adaptée pour réaliser la connexion avec le réseau de communication 16 et pour effectuer le traitement des données transitant par le réseau de communication 16, selon le protocole de communication choisi, une unité électronique de calcul 50, par exemple un processeur ,et une mémoire électronique 52, adaptés à communiquer via un bus de communication interne 48 ou disposés sur un même circuit imprimé.

Dans un mode de réalisation alternatif, le contrôleur réseau 42 de l'interface de communication 40 est implémenté par l'unité électronique de calcul (e.g. le processeur) 50.

Le dispositif de contrôle 8 est configuré pour contrôler au maximum N actionneurs, par exemple N=18.

Dans l'exemple illustré, le dispositif de contrôle 8 contrôle sept actionneurs qui sont regroupés en deux groupes, un premier groupe G₁ comprenant trois actionneurs et un deuxième groupe G₂ comprenant quatre actionneurs.

Chaque actionneur 30ᵢ comprend également une interface de communication 58 (représentée sur un seul des actionneurs de la figure 4), physiquement similaire à l'interface de communication 40 décrite en référence à la figure 3, pour réaliser la connexion avec le dispositif de contrôle 8 et pour effectuer le traitement des données selon le protocole de communication choisi, par exemple un protocole de communication propriétaire basé sur le protocole IPv6. Les actionneurs 30ᵢ sont connectés au dispositif de contrôle 8 par des liaisons filaires RS485 et éventuellement par des passerelles assurant la compatibilité entre le protocole de communication des actionneurs 30ᵢ avec le réseau de communication 16.

Le regroupement des actionneurs en groupes est par exemple effectué lors de la mise en place de l'installation domotique, dans une phase de configuration.

Par exemple, l'appartenance à un groupe, identifié par un identifiant de groupe, est mémorisée, par le dispositif de contrôle 8 et/ou par chaque actionneur 30ᵢ.

Le dispositif de contrôle 8 est un dispositif électronique programmable, configuré pour mettre en œuvre un procédé surveillance de statut de fonctionnement d'actionneurs. Il comporte un module 54 d'obtention, pour chaque groupe d'actionneurs commandés, d'un actionneur représentatif du groupe, et un module 56 d'obtention d'un statut de fonctionnement de l'actionneur représentatif de chaque groupe d'actionneurs et du statut de fonctionnement d'au moins un autre actionneur piloté par le dispositif de contrôle 8. Ainsi, dans un mode de réalisation, le dispositif de contrôle 8 forme un dispositif de surveillance de statut de fonctionnement d'actionneurs.

La mise en œuvre du module 56 est itérée à intervalles temporels réguliers dt sur un cycle temporel ΔT choisi. Par exemple, la durée du cycle temporel ΔT est déterminé en fonction du nombre de groupes et, optionnellement, de la vitesse de communication, i.e. du temps nécessaire pour la récupération du statut d'un actionneur, par exemple ΔT=900ms pour 4 groupes, et les intervalles temporels dt sont compris entre 100ms et 500ms, par exemple dt=180ms.

Le statut de fonctionnement d'un actionneur comporte une information de position de l'élément mobile (écran) du dispositif d'occultation associé à l'actionneur (ouvert, fermé, pourcentage d'ouverture, pourcentage de fermeture atteint) et/ou une information de bon fonctionnement ou de dysfonctionnement du dispositif d'occultation (fonctionnement nominal, arrêt moteur, défaut de fonctionnement, seuil thermique atteint au niveau du moteur).

Les modules 54 et 56 sont mémorisés par l'unité de mémoire électronique 52.

Par exemple les modules 54, 56 sont réalisés sous forme d'instructions de code exécutable et forment un programme d'ordinateur.

Dans un mode de réalisation, ce programme d'ordinateur est mémorisé sur un support d'informations lisible par un dispositif électronique programmable. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante non représentée, ces modules sont réalisés sous forme de circuit intégré dédié, tel qu'un ASIC (de l'anglais *Application Specific Integrated Circuit*).

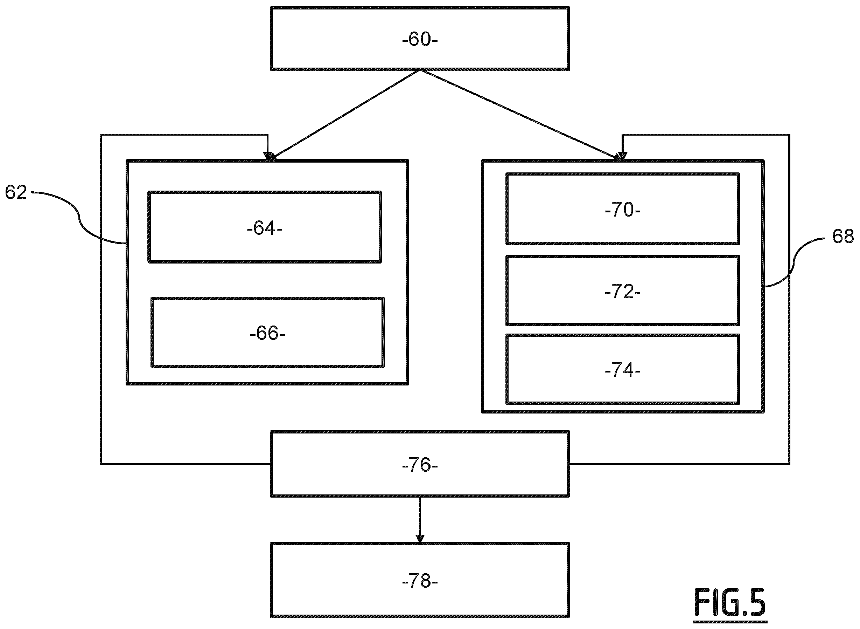

La **figure 5** est un organigramme des principales étapes d'un procédé de surveillance de statut de fonctionnement d'actionneurs électromécaniques d'une installation domotique selon un mode de réalisation.

Dans ce mode de réalisation, le procédé est mis en œuvre par le processeur d'un dispositif de contrôle 8, qui est configuré pour commander N d'actionneurs, N>1, qui sont groupés en un ou plusieurs groupes dans une phase de configuration préalable.

Le procédé comporte une étape 60 d'obtention d'un actionneur représentatif par groupe d'actionneurs. Par exemple, un actionneur représentatif par groupe d'actionneurs est désigné et mémorisé lors d'une étape de configuration, par un installateur de l'installation domotique.

La sélection d'un actionneur représentatif d'un groupe est effectuée en fonction d'un critère : position spatiale dans le bâtiment de l'actionneur et du dispositif d'occultation associé, proximité spatiale de l'actionneur du dispositif de contrôle.

En variante, la sélection d'un actionneur représentatif par groupe est par exemple effectuée aléatoirement, lorsque tous les actionneurs d'un même groupe ont des caractéristiques techniques analogues.

Par exemple, dans la figure 4, l'actionneur 30₂ est désigné actionneur représentatif du groupe G₁ et l'actionneur 30₆ est désigné actionneur représentatif du groupe G₂.

Le dispositif de contrôle reçoit un identifiant d'actionneur représentatif par groupe d'actionneurs et mémorise cet identifiant en association avec le groupe d'actionneurs correspondant.

L'identifiant représentatif est par exemple une adresse réseau associée à l'interface de communication de(s) l'actionneur(s) représentatif(s) choisi(s).

Par exemple, une requête de demande d'identifiant de l'actionneur représentatif d'un groupe est émise, la requête comportant une identifiant du groupe, et un des actionneurs du groupe répond avec l'identifiant de l'actionneur représentatif du groupe auquel est adressée la requête.

Le procédé comprend ensuite les étapes suivantes, répétées à des intervalles temporels dt régulier, et mises en œuvre par le dispositif de contrôle 8A, 8B.

Il comprend une étape 62 d'obtention, pour chaque groupe Gᵢ commandé par le dispositif de contrôle 8, d'un statut de fonctionnement de l'actionneur représentatif du groupe Gᵢ.

L'étape 62 comporte une sous-étape 64 de formulation, pour chaque groupe Gᵢ d'actionneurs, d'une requête de demande du statut de fonctionnement de l'actionneur représentatif du groupe Gᵢ et d'envoi de la requête formulée au groupe Gᵢ d'actionneurs.

Par exemple, la requête est formulée en fonction du protocole de communication choisi et comprend un identifiant de l'actionneur représentatif du groupe.

En variante, la requête de demande du statut de fonctionnement est adressée directement à l'actionneur représentatif de chaque groupe Gᵢ.

L'étape 62 comprend également une sous-étape 66 de réception d'une réponse, en provenance de l'actionneur représentatif du groupe Gᵢ, comprenant le statut de fonctionnement de l'actionneur représentatif, qui est mémorisé.

Successivement ou sensiblement en parallèle, une étape 68 d'obtention d'un statut de fonctionnement d'un autre actionneur commandé par le dispositif de contrôle est mise en œuvre.

L'étape 68 comprend une sous-étape 70 de sélection dudit autre actionneur parmi les actionneurs restants, qui ne sont pas désignés comme actionneur représentatif d'un groupe d'actionneurs.

Par exemple, la sélection est effectuée dans un ordre de sélection prédéterminé, par exemple selon une liste d'ordonnancement préalablement enregistrée, d'un autre actionneur, différent de celui choisi précédemment, étant choisi à chaque itération. Par exemple, la liste d'ordonnancement est constituée de manière à ce que ledit autre actionneur choisi appartienne à un groupe différent à chaque itération, de préférence en parcourant successivement tous les groupes.

En variante, la sélection de l'autre actionneur est effectuée aléatoirement. De préférence, un identifiant de l'actionneur sélection à l'itération précédente est mémorisé de manière à ne pas sélectionner deux fois de suite un même autre actionneur.

Par exemple, dans le cas illustré schématiquement à la figure 4, l'actionneur 30₁ est choisi en tant qu'autre actionneur à l'étape de sélection 70 lors de la première itération, et l'actionneur référencé 30ᵢ sur la figure 4 est choisi en tant qu'autre actionneur à l'étape de sélection 70 lors de la deuxième itération. De préférence, le procédé effectue la sélection successive de tous les actionneurs qui n'ont pas été désignés comme actionneurs représentatifs de groupe d'actionneurs, de manière à obtenir, après un nombre d'itérations dépendant du nombre N d'actionneurs et du nombre de groupes d'actionneurs, le statut de fonctionnement de chaque actionneur piloté par le dispositif de contrôle.

Par exemple, en considérant l'exemple de la figure 4, les statuts de fonctionnement de tous les actionneurs des groupes d'actionneurs G₁ et G₂ sont obtenus au bout de 5 itérations, les statuts de fonctionnements des actionneurs 30₂, 30₆ ainsi que d'un autre actionneur sélectionné étant obtenus à chaque itération.

L'étape 70 est suivie d'une étape 72 de formulation d'une requête de demande du statut de fonctionnement de l'autre actionneur sélectionné à l'étape 70, et d'envoi de la requête formulée, et d'une étape 74 de réception d'une réponse, en provenance dudit autre actionneur comprenant le statut de fonctionnement dudit autre actionneur représentatif, qui est mémorisé.

Avantageusement, l'obtention des statuts de fonctionnement à chaque itération est rapide, dans la mesure où le nombre de requêtes/réponses est petit, tout en assurant la réception à chaque itération du statut de fonctionnement d'au moins un actionneur par groupe d'actionneurs.

Les étapes 62 d'obtention d'un statut de fonctionnement d'un actionneur représentatif de chaque groupe d'actionneurs, et 68 d'obtention d'un statut de fonctionnement d'un autre actionneur sont itérées (étape 76), à des intervalles temporels réguliers dt, par exemple toutes les secondes ou toutes les 180ms.

De plus, les statuts de fonctionnement de chaque actionneur représentatif de groupe et dudit autre actionneur sont traités lors d'une étape de traitement 78. Par exemple, le traitement consiste à commander un affichage des statuts de fonctionnement obtenus, le traitement comprenant l'envoi des statuts de fonctionnement, via le réseau de communication, au dispositif de calcul et de commande central 26 (« Master controller »,) et/ou au à l'unité de commande centrale 14. Par exemple, l'unité de commande centrale affiche une information en lien avec les statuts de fonctionnement sur une interface homme-machine, pour permettre à un utilisateur de suivre à distance l'ouverture/fermeture des dispositifs d'occultation. Par exemple, le pourcentage d'ouverture ou de fermeture de chaque écran est affiché quasiment en temps réel.

Dans un mode de réalisation, les statuts de tous les actionneurs (actionneurs représentatifs de chaque groupe et autre actionneur) interrogés à l'itération précédente sont affichés.

Dans un mode de réalisation, les statuts des actionneurs n'ayant pas été interrogés à l'itération précédente sont mis à jour à partir du statut de l'actionneur représentatif de leur groupe. Ainsi, l'interface permet de visualiser des statuts de l'ensemble des actionneurs, les statuts affichés étant mis à jour à chaque itération, alors même que l'instant d'interrogation diffère d'un actionneur à un autre, selon l'itération pendant laquelle ils ont été interrogés.

Par exemple, en cas de dysfonctionnement (e.g. statut de fonctionnement indiquant par exemple une erreur ou un dépassement de seuil de température au niveau du moteur commandé) une alarme est envoyée à l'unité de commande centrale ou à un autre équipement connecté au réseau de communication 16.

Selon une variante optionnelle, en cas de dysfonctionnement constaté (i.e. le statut de fonctionnement comprend une information d'erreur ou de dysfonctionnement) pour un actionneur représentatif d'un groupe d'actionneurs lors d'une itération, à l'itération suivante, un nouvel actionneur représentatif de ce groupe est sélectionné. Par exemple, il s'agit d'un actionneur désigné lors de la configuration comme « actionneur représentatif suppléant ». Les étapes du procédé de surveillance de statut sont alors effectuées avec ce nouvel actionneur représentatif du groupe.

Dans le cas où un groupe d'actionneur ne comprend qu'un seul actionneur, celui-ci est automatiquement désigné comme actionneur représentatif et son statut est demandé à chacune des itérations du procédé.

Selon une variante du procédé décrit ci-dessus, pour chaque groupe d'actionneurs, le procédé comporte une étape de sélection d'un deuxième actionneur, dit autre actionneur, analogue à l'étape 70 décrite ci-dessus, suivie d'une formulation d'une requête de demande de statut de fonctionnement groupé des actionneurs représentatifs de chaque groupe Gi d'actionneurs et dudit autre actionneur sélectionné.

Selon une variante, le statut de fonctionnement de plusieurs autres actionneurs en plus des actionneurs représentatifs de chaque groupe, est demandé. Par exemple, considérant que les actionneurs représentatifs de chaque groupe d'actionneurs sont des premiers actionneurs, le procédé comporte une étape de sélection d'un deuxième actionneur, distinct des actionneurs représentatifs de groupe, puis d'un troisième actionneur, distinct des premiers actionneurs et du deuxième actionneur ; puis une requête ou plusieurs requêtes de statut de fonctionnement des premiers actionneurs, ainsi que dudit deuxième et dudit troisième actionneur.

De préférence, lorsque le dispositif de contrôle est configuré pour contrôler au moins deux groupes d'actionneurs, le deuxième actionneur choisi et le troisième actionneur choisi appartiennent à des groupes d'actionneurs distincts.

Selon une autre variante, à chaque itération, est obtenu le statut de fonctionnement de l'actionneur représentatif de chaque groupe d'actionneurs ainsi que d'un autre actionneur de chaque groupe d'actionneurs. Dans cette variante, si par exemple le dispositif de contrôle est configuré pour contrôler 4 groupes d'actionneurs, les statuts de fonctionnement de 8 actionneurs (2 par groupe d'actionneurs) sont obtenus à chaque itération.

Selon une autre variante, l'étape 62 d'obtention d'un statut de fonctionnement d'un actionneur représentatif de chaque groupe d'actionneurs est mise en œuvre différemment, chaque actionneur représentatif envoyant, à intervalles temporels réguliers, son statut de fonctionnement dans un message destiné au dispositif de contrôle 8, sans requête préalable de ce dispositif. Dans cette variante, le dispositif de contrôle 8 reçoit et enregistre le statut de chaque actionneur représentatif de groupe. Le dispositif de contrôle effectue néanmoins la sélection d'un autre actionneur (étape 70), la requête de statut de fonctionnement de l'autre actionneur (étape 72) et la réception et mémorisation du statut de fonctionnement de l'autre actionneur (étape 74).

## Revendications

1. Procédé de surveillance de statut de fonctionnement d'actionneurs électromécaniques d'une installation domotique, l'installation domotique comprenant une pluralité de dispositifs d'occultation motorisés, chaque actionneur électromécanique associé à un dispositif d'occultation comprenant au moins un moteur électrique, commandable par ledit actionneur électromécanique pour déplacer en ouverture et/ou en fermeture un élément mobile du dispositif d'occultation, lesdits actionneurs électromécaniques étant pilotés par groupe(s) d'actionneurs électromécaniques par un dispositif de contrôle (8,8A,8B), lesdits actionneurs électromécaniques et lesdits dispositifs de contrôle étant connectés dans un réseau de communication (16) et étant configurés pour communiquer selon un protocole de communication prédéfini, le procédé étant **caractérisé en ce qu'**il comporte des étapes, mises en oeuvre par un processeur de calcul (50) du dispositif de contrôle (8,8A,8B), de :
- pour chaque groupe d'actionneurs électromécaniques pilotés par ledit dispositif de contrôle, obtention et mémorisation (60) d'un actionneur représentatif du groupe d'actionneurs ;
- sur au moins un cycle temporel choisi, itération des étapes suivantes :
- obtention (62) d'un statut de fonctionnement de l'actionneur représentatif du ou de chaque groupe d'actionneurs ;
- obtention (68) d'un statut de fonctionnement d'au moins un autre actionneur piloté par ledit dispositif de contrôle.

2. Procédé selon la revendication 1, dans lequel le statut de fonctionnement d'un actionneur comprend une information de position de l'élément mobile du dispositif d'occultation et/ou une information de bon fonctionnement ou de dysfonctionnement du dispositif d'occultation.

3. Procédé selon la revendication 2, dans lequel l'information de position indique une position d'ouverture ou un pourcentage d'ouverture, une position de fermeture ou un pourcentage de fermeture.

4. Procédé selon l'une quelconque des revendications 1 à 3, dans lequel l'obtention (62) d'un statut de fonctionnement de l'actionneur représentatif d'un groupe d'actionneurs comprend, pour chaque groupe d'actionneurs, une formulation (64) de requête de demande de statut de statut de l'actionneur représentatif et une réception (66) de réponse comprenant ledit statut dudit actionneur représentatif, lesdites requête et réponse comprenant un identifiant dudit actionneur représentatif.

5. Procédé selon l'une quelconque des revendications 1 à 4, dans lequel l'étape d'obtention (68) d'un statut de fonctionnement d'au moins un autre actionneur piloté par ledit dispositif de contrôle comprend une étape (70) de sélection dudit autre actionneur parmi les actionneurs pilotés par ledit dispositif de contrôle non désignés comme actionneurs représentatifs de groupe d'actionneurs, la sélection (70) étant effectué selon un ordre de sélection prédéterminé.

6. Procédé selon la revendication 5, dans lequel ledit ordre de sélection prédéterminé désigne successivement des actionneurs appartenant à des groupes d'actionneurs différents.

7. Procédé selon l'une quelconque des revendications 1 à 4, dans lequel l'étape d'obtention d'un statut de fonctionnement d'au moins un autre actionneur piloté par ledit dispositif de contrôle comprend une étape de sélection de l'autre actionneur parmi les actionneurs pilotés par ledit dispositif de contrôle non désignés comme actionneurs représentatifs de groupe d'actionneurs, la sélection étant effectué aléatoirement parmi des actionneurs pilotés par le dispositif de contrôlé et non sélectionnés précédemment.

8. Procédé selon l'une quelconque des revendications 1 à 7, dans lequel l'étape d'obtention (68) d'un statut de fonctionnement d'au moins un autre actionneur piloté par ledit dispositif de contrôle est effectuée, lors de chaque itération, pour chaque groupe d'actionneurs.

9. Procédé selon l'une quelconque des revendication 1 à 8, comportant, à chaque itération, suite à l'obtention du statut de fonctionnement de l'actionneur représentatif de chaque groupe d'actionneurs et à l'obtention du statut de fonctionnement d'au moins un autre actionneur, une mise à jour des statuts de fonctionnement des actionneurs d'un groupe d'actionneurs à partir du statut de fonctionnement de l'actionneur représentatif dudit groupe d'actionneurs et une commande d'affichage (78) desdits statuts de fonctionnement obtenus pour chaque actionneur piloté par ledit dispositif de contrôle.

10. Programme d'ordinateur comportant des instructions logicielles qui, lorsqu'elles sont exécutées par un dispositif électronique programmable, mettent en oeuvre un procédé de surveillance de statut de fonctionnement d'actionneurs électromécaniques conforme aux revendications 1 à 9.

11. Dispositif de surveillance de statut de fonctionnement d'actionneurs électromécaniques d'une installation domotique (4), l'installation domotique (4) comprenant une pluralité de dispositifs d'occultation (6) motorisés, chaque actionneur électromécanique (30₁,...,30ᵢ,...,30₆) associé à un dispositif d'occultation comprenant au moins un moteur électrique, commandable par ledit actionneur électromécanique (30₁,...,30ᵢ,...,30₆) pour déplacer en ouverture et/ou en fermeture un élément mobile du dispositif d'occultation (6), lesdits actionneurs électromécaniques (30₁,...,30ᵢ,...,30₆) étant pilotés par groupe(s) d'actionneurs électromécaniques par un dispositif de contrôle (8,8A,8B), lesdits actionneurs électromécaniques (30₁,...,30ᵢ,...,30₆) et lesdits dispositifs de contrôle (8, 8A, 8B) étant connectés dans un réseau de communication (16) et étant configurés pour communiquer selon un protocole de communication prédéfini, le dispositif de surveillance étant **caractérisé en ce qu'**il comporte un processeur de calcul (50) configuré pour mettre en oeuvre, pour un dispositif de contrôle (8) :
- un module (54) d'obtention et mémorisation d'un actionneur représentatif (30₂, 30₆) du groupe d'actionneurs (G₁, G₂) pour chaque groupe d'actionneurs électromécaniques pilotés par ledit dispositif de contrôle ;
- et pour mettre en oeuvre de manière itérative, sur au moins un cycle temporel choisi:
- un module (56) d'obtention d'un statut de fonctionnement de l'actionneur représentatif (30₂, 30₆) du ou de chaque groupe d'actionneurs (G₁, G₂);
- un module (56) d'obtention d'un statut de fonctionnement d'au moins un autre actionneur (30₁, 30ᵢ) piloté par ledit dispositif de contrôle.

12. Installation domotique (4) comprenant une pluralité de dispositifs d'occultation motorisés (6), chaque dispositif d'occultation motorisé ayant un actionneur électromécanique (30₁,...30ᵢ,...30₆) associé, chaque actionneur électromécanique comprenant au moins un moteur électrique, commandable par ledit actionneur électromécanique pour déplacer en ouverture et/ou en fermeture un élément mobile du dispositif d'occultation, l'installation domotique (4) comprenant en outre au moins un dispositif de contrôle (8, 8A, 8B) configuré pour piloter lesdits actionneurs électromécaniques (30₁,...30ᵢ,...30₆) par groupe(s) d'actionneurs, lesdits actionneurs (30₁, ... 30ᵢ, ... 30₆) et lesdits dispositifs de contrôle (8, 8A, 8B) étant connectés dans un réseau de communication (16) et étant configurés pour communiquer selon un protocole de communication prédéfini, l'installation domotique comportant au moins un dispositif de surveillance de statut de fonctionnement d'actionneurs électromécaniques selon la revendication 11.

## Patentansprüche

1. Verfahren zur Überwachung des Betriebszustands elektromechanischer Aktuatoren einer Haustechnikanlage, wobei die Haustechnikanlage eine Vielzahl motorisierter Abdeckvorrichtungen umfasst, wobei jeder elektromechanische Aktuator, der einer Abdeckvorrichtung zugeordnet ist, mindestens einen Elektromotor umfasst, der von dem elektromechanischen Aktuator steuerbar ist, um ein bewegliches Element der Abdeckvorrichtung beim Öffnen und/oder beim Schließen zu bewegen, wobei die elektromechanischen Aktuatoren in elektromechanischen Aktuatorgruppe(n) von einer Steuervorrichtung (8, 8A, 8B) gesteuert werden, wobei die elektromechanischen Aktuatoren und die Steuervorrichtungen in einem Kommunikationsnetzwerk (16) verbunden und ausgelegt sind, um gemäß einem vordefinierten Kommunikationsprotokoll zu kommunizieren, wobei das Verfahren **dadurch gekennzeichnet ist, dass** es Schritte umfasst, die von einem Rechenprozessor (50) der Steuervorrichtung (8, 8A, 8B) ausgeführt werden:
- für jede Gruppe elektromechanischer Aktuatoren, die von der Steuervorrichtung gesteuert werden, des Erhaltens und Speicherns (60) eines Aktuators, der für die Aktuatorgruppe repräsentativ ist;
- über mindestens einen ausgewählten Zeitzyklus, Iteration der folgenden Schritte:
- Erhalten (62) eines Betriebszustands des Aktuators, der für die oder jede Aktuatorgruppe repräsentativ ist;
- Erhalten (68) eines Betriebszustands von mindestens einem anderen Aktuator, der von der Steuereinrichtung gesteuert wird.

2. Verfahren nach Anspruch 1, wobei der Betriebszustand eines Aktuators eine Information über die Position des beweglichen Elements der Abdeckvorrichtung und/oder eine Information über die ordnungsgemäße Funktion oder Fehlfunktion der Abdeckvorrichtung umfasst.

3. Verfahren nach Anspruch 2, wobei die Positionsinformation eine Öffnungsposition oder einen Öffnungsprozentsatz, eine Schließposition oder einen Schließprozentsatz angibt.

4. Verfahren nach einem der Ansprüche 1 bis 3, wobei das Erhalten (62) eines Betriebszustands des repräsentativen Aktuators einer Aktuatorgruppe für jede Aktuatorgruppe eine Anforderungsformulierung (64) einer Statusabfrage nach dem Status des repräsentativen Aktuators und einen Empfang (66) einer Antwort, die den Status des repräsentativen Aktuators enthält, umfasst, wobei die Abfrage und die Antwort eine Kennung des repräsentativen Aktuators umfassen.

5. Verfahren nach einem der Ansprüche 1 bis 4, wobei der Schritt des Erhaltens (68) eines Betriebszustands von mindestens einem anderen Aktuator, der von der Steuervorrichtung gesteuert wird, einen Schritt (70) des Auswählens des anderen Aktuators aus den Aktuatoren umfasst, die von der Steuervorrichtung gesteuert werden, die nicht als repräsentative Aktuatoren einer Aktuatorgruppe bezeichnet sind, wobei die Auswahl (70) gemäß einer vorbestimmten Auswahlreihenfolge durchgeführt wird.

6. Verfahren nach Anspruch 5, wobei die vorbestimmte Auswahlreihenfolge nacheinander Aktuatoren bezeichnet, die zu verschiedenen Aktuatorgruppen gehören.

7. Verfahren nach einem der Ansprüche 1 bis 4, wobei der Schritt des Erhaltens eines Betriebszustands von mindestens einem anderen Aktuator, der von der Steuervorrichtung gesteuert wird, einen Schritt des Auswählens des anderen Aktuators aus den Aktuatoren umfasst, die von der Steuervorrichtung gesteuert werden, die nicht als repräsentative Aktuatoren einer Aktuatorgruppe bezeichnet sind, wobei die Auswahl zufällig aus den Aktuatoren erfolgt, die von der Steuervorrichtung gesteuert werden und vorher nicht ausgewählt wurden.

8. Verfahren nach einem der Ansprüche 1 bis 7, wobei der Schritt des Erhaltens (68) eines Betriebszustands von mindestens einem anderen Aktuator, der von der Steuervorrichtung gesteuert wird, bei jeder Iteration für jede Aktuatorgruppe durchgeführt wird.

9. Verfahren nach einem der Ansprüche 1 bis 8, das bei jeder Iteration nach Erhalt des Betriebszustands des für jede Aktuatorgruppe repräsentativen Aktuators und nach Erhalt des Betriebszustands mindestens eines anderen Aktuators eine Aktualisierung der Betriebszustände der Aktuatoren einer Aktuatorgruppe ausgehend vom Betriebszustand des für die Aktuatorgruppe repräsentativen Aktuators und einen Befehl zur Anzeige (78) der erhaltenen Betriebszustände für jeden von der Steuervorrichtung gesteuerten Aktuator umfasst.

10. Computerprogramm, das Softwareanweisungen aufweist, die, wenn sie von einer programmierbaren elektronischen Vorrichtung ausgeführt werden, ein Verfahren zur Betriebszustandsüberwachung elektromechanischer Aktuatoren nach den Ansprüchen 1 bis 9 umsetzen.

11. Vorrichtung zur Überwachung des Betriebszustands elektromechanischer Aktuatoren einer Haustechnikanlage (4), wobei die Haustechnikanlage (4) eine Vielzahl motorisierter Abdeckvorrichtungen (6) umfasst, wobei jeder elektromechanische Aktuator (30₁,....30ᵢ,...,30₆), der einer Abdeckvorrichtung zugeordnet ist, mindestens einen Elektromotor umfasst, der von dem elektromechanischen Aktuator (30₁,...,30ᵢ,...,30₆) steuerbar ist, um ein bewegliches Element der Abdeckvorrichtung (6) beim Öffnen und/oder Schließen zu bewegen, wobei die elektromechanischen Aktuatoren (30₁,...,30ᵢ,...,30₆) in elektromechanischen Aktuatorengruppen von einer Steuervorrichtung (8, 8A, 8B) gesteuert werden, wobei die elektromechanischen Aktuatoren (30₁,...,30ᵢ,...,30₆) und die Steuervorrichtungen (8, 8A, 8B) in einem Kommunikationsnetzwerk (16) verbunden und ausgelegt sind, um gemäß einem vordefinierten Kommunikationsprotokoll zu kommunizieren, wobei die Überwachungsvorrichtung **dadurch gekennzeichnet ist, dass** sie einen Rechenprozessor (50) umfasst, der ausgelegt ist, um für eine Steuervorrichtung (8) umzusetzen:
- ein Modul (54) zum Erhalten und Speichern eines repräsentativen Aktuators (30₂, 30₆) der Aktuatorgruppe (G₁, G₂) für jede Gruppe elektromechanischer Aktuatoren, die von der Steuervorrichtung gesteuert werden;
- und zum iterativen Umsetzen über mindestens einen ausgewählten Zeitzyklus:
- ein Modul (56) zum Erhalten eines Betriebszustands des repräsentativen Aktuators (30₂, 30₆) der oder jeder Aktuatorgruppe (G₁, G₂);
- ein Modul (56) zum Erhalten eines Betriebszustands von mindestens einem anderen Aktuator (30₁, 30ᵢ), der von der Steuervorrichtung gesteuert wird.

12. Haustechnikanlage (4), die eine Vielzahl motorisierter Abdeckvorrichtungen (6) umfasst, wobei jede motorisierte Abdeckvorrichtung einen zugeordneten elektromechanischen Aktuator (30₁,...,30ᵢ,...,30₆) hat, wobei jeder elektromechanische Aktuator mindestens einen Elektromotor umfasst, der von dem elektromechanischen Aktuator steuerbar ist, um ein bewegliches Element der Abdeckvorrichtung beim Öffnen und/oder beim Schließen zu bewegen, wobei die Haustechnikanlage (4) ferner mindestens eine Steuervorrichtung (8, 8A, 8B) umfasst, die ausgelegt ist, um die elektromechanischen Aktuatoren (30₁,...,30ᵢ,...,30₆) nach Aktuatorgruppe(n) zu steuern, wobei die Aktuatoren (30₁,...,30ᵢ,...,30₆) und die Steuervorrichtungen (8, 8A, 8B) in einem Kommunikationsnetzwerk (16) verbunden und ausgelegt sind, um gemäß einem vordefinierten Kommunikationsprotokoll zu kommunizieren, wobei die Haustechnikanlage mindestens eine Vorrichtung zur Überwachung des Betriebszustands elektromechanischer Aktuatoren nach Anspruch 11 umfasst.

## Claims

1. A method of monitoring the operating status of electromechanical actuators in a home automation installation, the home automation installation comprising a plurality of motorised occultation devices, each electromechanical actuator associated with an occultation device comprising at least one electric motor, that can be controlled by said electromechanical actuator to move a movable element of the occultation device so as to open and/or close, said electromechanical actuators being controlled in group(s) of electromechanical actuators by a control device (8, 8A, 8B), said electromechanical actuators and said control devices being connected in a communication network (16) and being configured to communicate according to a predefined communication protocol, the method being **characterised in that** it comprises the steps, implemented by a calculation processor (50) of the control device (8, 8A, 8B), of:
- for each group of electromechanical actuators controlled by said control device, obtaining and storing (60) an actuator representative of the group of actuators;
- on at least one selected time cycle, iteration of the following steps:
- obtaining (62) an operating status of the actuator representative of the or each group of actuators;
- obtaining (68) an operating status of at least one other actuator controlled by said control device.

2. The method according to claim 1, wherein the operating status of an actuator comprises information about the position of the movable element of the occultation device and/or information about the correct operation or malfunction of the occultation device.

3. The method according to claim 2, wherein the position information indicates an open position or an opening percentage, a closed position or a closing percentage.

4. The method according to any one of claims 1 to 3, wherein obtaining (62) an operating status of the actuator representative of a group of actuators comprises, for each group of actuators, formulating (64) a request for the status of the representative actuator and receiving (66) a response comprising said status of said representative actuator, said request and response comprising an identifier of said representative actuator.

5. The method according to any one of claims 1 to 4, wherein the step (68) of obtaining an operating status of at least one other actuator controlled by said control device comprises a step (70) of selecting said other actuator from among the actuators controlled by said control device not designated as actuators representative of a group of actuators, the selection (70) being carried out according to a predetermined selection order.

6. The method according to claim 5, wherein said predetermined selection order successively designates actuators belonging to different actuator groups.

7. The method according to any one of claims 1 to 4, wherein the step of obtaining an operating status of at least one other actuator controlled by said control device comprises a step of selecting the other actuator from among the actuators controlled by said control device not designated as actuators representative of a group of actuators, the selection being made randomly from among actuators controlled by the control device and not previously selected.

8. The method according to any one of claims 1 to 7, wherein the step of obtaining (68) an operating status of at least one other actuator controlled by said control device is carried out, during each iteration, for each group of actuators.

9. The method according to any one of claims 1 to 8, comprising, at each iteration, following obtaining of the operating status of the actuator representative of each group of actuators and the obtaining of the operating status of at least one other actuator, the updating of the operating statuses of the actuators of a group of actuators on the basis of the operating status of the actuator representative of said group of actuators and a command (78) for displaying said operating statuses obtained for each actuator controlled by said control device.

10. A computer program comprising software instructions which, when executed by a programmable electronic device, implement a method of monitoring the operating status of electromechanical actuators in accordance with claims 1 to 9.

11. A device for monitoring the operating status of electromechanical actuators of a home automation installation (4), the home automation installation (4) comprising a plurality of motorised occultation devices (6), each electromechanical actuator (30₁, ..., 30ᵢ, ...30₆) associated with an occultation device comprising at least one electric motor, controllable by said electromechanical actuator (30₁, ..., 30ᵢ, ..., 30₆) to move a movable element of the occultation device (6) so as to open and/or close, said electromechanical actuators (30₁, ..., 30ᵢ, ..., 30₆) being controlled in group(s) of electromechanical actuators by a control device (8, 8A, 8B), said electromechanical actuators (30₁, ..., 30ᵢ, ..., 30₆) and said control devices (8, 8A, 8B) being connected in a communication network (16) and being configured to communicate according to a predefined communication protocol, the monitoring device being **characterised in that** it comprises a calculation processor (50) configured to implement, for a control device (8):
- a module (54) for obtaining and storing an actuator (30₂, 30₆) representative of the group of actuators (G₁, G₂) for each group of electromechanical actuators controlled by said control device;
- and to implement iteratively, over at least one selected time cycle:
- a module (56) for obtaining an operating status of the actuator (30₂, 30₆) representative of the or each group of actuators (G₁, G₂);
- a module (56) for obtaining an operating status of at least one other actuator (30₁, 30ᵢ) controlled by said control device.

12. A home automation installation (4) comprising a plurality of motorised occultation devices (6), each motorised occultation device having an associated electromechanical actuator (30₁, ..., 30ᵢ, ..., 30₆), each electromechanical actuator comprising at least one electric motor, that can be controlled by said electromechanical actuator to move a movable element of the occultation device so as to open and/or close, the home automation installation (4) further comprising at least one control device (8, 8A, 8B) configured to control said electromechanical actuators (30₁, ..., 30ᵢ, ..., 30₆) in group(s) of actuators, said actuators (30₁, ..., 30ᵢ, ..., 30₆) and said control devices (8, 8A, 8B) being connected in a communication network (16) and being configured to communicate according to a predefined communication protocol, the home automation installation including at least one device for monitoring the operating status of electromechanical actuators according to claim 11.
